# EUROPEAN PATENT APPLICATION

(11) **EP 4 763 359 A1**
(43) Date of publication of application: **24.06.2026**
(21) Application number: 25841345.9
(22) Date of filing: 08.07.2025
(51) Int. Cl.: B05C 5/02, H01M 4/04, H01M 10/42, B05C 11/10

(54) **COATING APPARATUS**

(30) Priority: 17.07.2024 KR 20240094323
(71) Applicant: LG Energy Solution, Ltd., Seoul 07335 (KR)
(72) Inventor: PARK, Min Gu, Daejeon 34122 (KR); MOON, Young Gyu, Daejeon 34122 (KR); KIM, Guk Tae, Daejeon 34122 (KR)
(74) Representative: Plasseraud IP
(86) International application number: PCT/KR2025/009882
(87) International publication number: WO 2026/019143

(57) **Abstract**

Disclosed herein relates to a coating apparatus including: a coating die configured to discharge an electrode slurry toward a substrate and including an electrode slurry discharge port for discharging the electrode slurry; and a flow control block connected to the outer surface of the coating die facing the substrate and extending from the outer surface of the coating die toward the substrate, wherein the flow control block is spaced apart from the electrode slurry discharge port, wherein the width of the flow control block is smaller than the width of the electrode slurry discharge port.

## Description

### [Technical Field]

The present disclosure relates to a coating apparatus.

This application claims the benefit of Korean Patent Application No. 10-2024-0094323, filed on July 17, 2024, the disclosure of which is incorporated herein by reference.

### [Background]

With the increasing development and demand for mobile apparatuses, the demand for secondary batteries as energy sources is rapidly growing. These secondary batteries necessarily include an electrode assembly as a power generation element. The electrode assembly has a form where a positive electrode, separator, and negative electrode are stacked at least once, and the positive electrode and negative electrode are manufactured by coating and drying positive electrode active material slurry and negative electrode active material slurry onto current collectors made of aluminum foil and copper foil, respectively. To coat these positive electrode active material slurry and negative electrode active material slurry onto the current collectors, a slot die coater is generally used.

### [Summary]

### [Technical Problem]

The technical problem to be solved by the present disclosure is to provide a coating apparatus.

### [Technical Solution]

To solve the aforementioned problem, the technical concept of the present disclosure provides a coating apparatus including: a coating die configured to discharge an electrode slurry toward a substrate and comprising an electrode slurry discharge port for discharging the electrode slurry; and a flow control block connected to the outer surface of the coating die facing the substrate and extending from the outer surface of the coating die toward the substrate, wherein the flow control block is spaced apart from the electrode slurry discharge port, wherein the width of the flow control block is smaller than the width of the electrode slurry discharge port.

In exemplary embodiments, the distance between the flow control block and the substrate is smaller than the distance between the electrode slurry discharge port of the coating die and the substrate.

In exemplary embodiments, the electrode slurry discharged from the coating die forms an electrode slurry layer applied onto the substrate, and the flow control block is disposed on the flow path of the electrode slurry layer such that it interferes with the center part of the electrode slurry layer.

In exemplary embodiments, the flow control block includes a connecting part inserted into a groove of the coating die and a protruding part protruding from the coating die.

In exemplary embodiments, the coating apparatus further includes an actuator configured to move the flow control block.

In exemplary embodiments, the actuator is configured to move the flow control block to adjust the distance by which the flow control block protrudes from the coating die.

In exemplary embodiments, the actuator is configured to move the flow control block in a direction parallel to the width direction of the electrode slurry discharge port.

In exemplary embodiments, the actuator is configured to move the flow control block in a direction perpendicular to the width direction of the electrode slurry discharge port.

In exemplary embodiments, the coating die includes a first die and a second die spaced apart with the electrode slurry discharge port between them, wherein the first die includes: a groove extending in the width direction of the electrode slurry discharge port; and a first portion and a second portion spaced apart with the groove in between, wherein the groove of the first die extends from one side part of the first die to the other side part to penetrate the first die, and the flow control block includes a connecting part inserted into the groove of the coating die and a protruding part protruding from the coating die.

In exemplary embodiments, the second portion of the first die faces the second die, and the coating apparatus further includes a pressure rod disposed within the first portion of the first die and configured to pressurize the second portion of the first die.

In exemplary embodiments, the coating apparatus further includes a coating shim disposed within the coating die, and including a flow path for conveying the electrode slurry communicating with the electrode slurry discharge port.

In exemplary embodiments, the coating die is further configured to discharge the insulating liquid toward the substrate, and the coating shim further includes a flow path for conveying the insulating liquid.

In exemplary embodiments, the coating apparatus further includes a coating roll configured to transfer the substrate, wherein the distance between the flow control block and the coating roll is smaller than the distance between the electrode slurry discharge port of the coating die and the coating roll.

### [Advantageous Effects]

According to exemplary embodiments of the present disclosure, the coating apparatus includes a flow control block configured to locally reduce the flow rate of the electrode slurry discharged from the coating die. Consequently, the electrode slurry layer formed by applying on the substrate can be formed with a relatively thin semi-coated part at its center part.

According to exemplary embodiments of the present disclosure, in an electrode assembly manufactured by stacking a positive electrode and a negative electrode, the end of the positive electrode facing the end of the negative electrode, which includes an electrode tab, has a relatively thin semi-coated part. This prevents the NP ratio reversal phenomenon in the electrode assembly. Accordingly, lithium-ion precipitation during charging and discharging can be prevented, and the safety and reliability of the secondary battery including the electrode assembly can be improved.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a perspective view showing a coating apparatus according to exemplary embodiments.
FIG. 2 is a separated perspective view showing the coating apparatus according to the exemplary embodiments.
FIG. 3 is a cross-sectional view showing the coating apparatus according to the exemplary embodiments.
FIG. 4 is a cross-sectional view of the coating apparatus taken along line IV-IV' of FIG. 3.
FIG. 5 is a cross-sectional view of the coating apparatus taken along line V-V' of FIG. 3.
FIG. 6 is a cross-sectional view showing a coating apparatus according to exemplary embodiments.
FIG. 7 is a cross-sectional view showing a coating apparatus according to exemplary embodiments.
FIG. 8 is a perspective view showing a coating apparatus according to exemplary embodiments.
FIG. 9 is a cross-sectional view showing a coating apparatus according to exemplary embodiments.
FIGS. 10 and 11 are cross-sectional views illustrating methods for manufacturing an electrode assembly according to exemplary embodiments.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

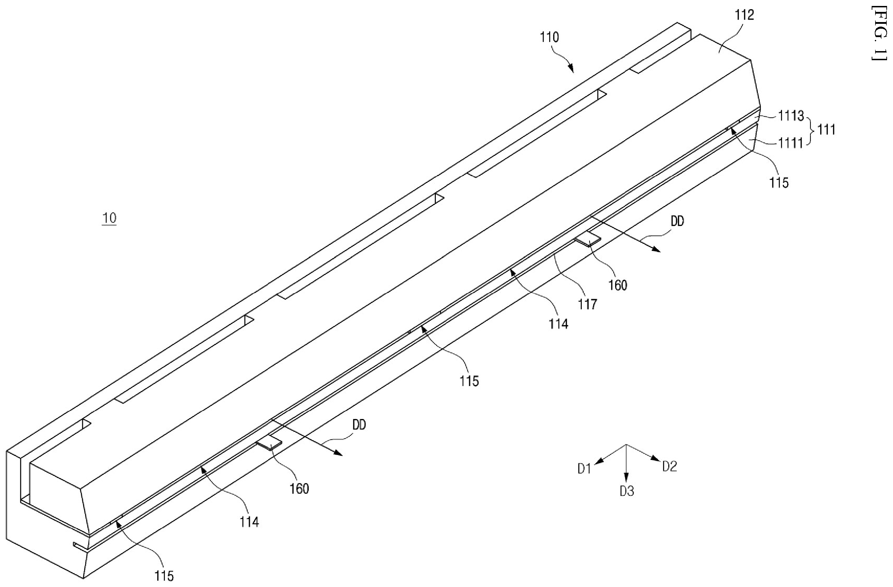

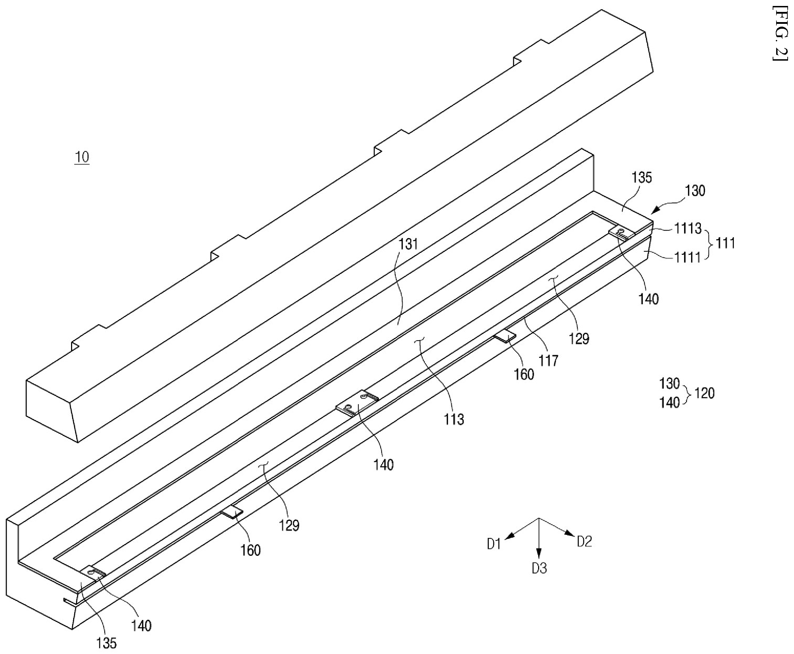

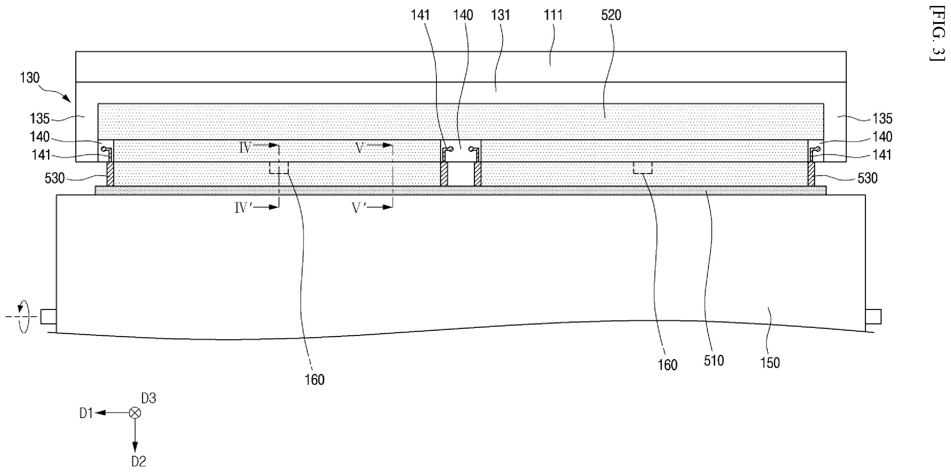

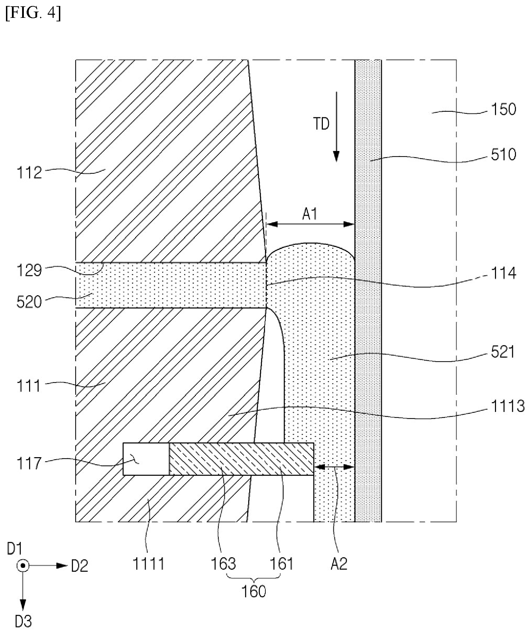

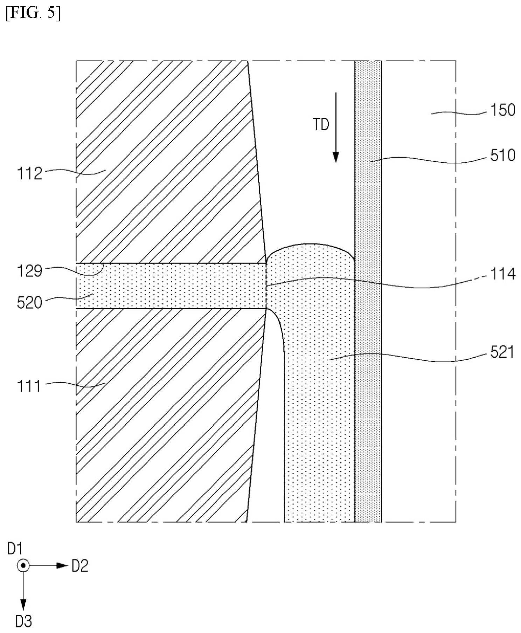

FIG. 1 is a perspective view showing a coating apparatus 10 according to exemplary embodiments. FIG. 2 is a separated perspective view showing the coating apparatus 10 according to exemplary embodiments. FIG. 3 is a cross-sectional view showing the coating apparatus 10 according to exemplary embodiments. FIG. 4 is a cross-sectional view of the coating apparatus 10 taken along line IV-IV' of FIG. 3. FIG. 5 is a cross-sectional view of the coating apparatus 10 taken along line V-V' of FIG. 3.

Referring to FIGS. 1 through 5, the coating apparatus 10 can perform a coating process to manufacture electrodes for secondary batteries by applying a coating liquid onto a substrate 510. The coating liquid may include an electrode slurry 520 and an insulating liquid 530. The coating apparatus 10 can discharge the electrode slurry 520 and the insulating liquid 530 toward the substrate 510 moving by the coating roll 150. The electrode slurry 520 applied onto the substrate 510 becomes an electrode slurry layer 521, and the insulating liquid 530 applied onto the substrate 510 may become an insulating layer covering the side part of the electrode slurry layer 521.

The substrate 510 may be a current collector. The current collector may be a positive electrode current collector. For example, the positive electrode current collector may include stainless steel, aluminum, nickel, titanium, ductile carbon, etc. The current collector may be a negative electrode current collector. For example, the negative electrode current collector may include copper, stainless steel, nickel, titanium, ductile carbon, etc.

The electrode slurry 520 may include an electrode active material, a conductive material, a binder, and additives. The electrode active material may include a positive electrode active material or a negative electrode active material. For example, the positive electrode active material may include a lithium metal composite oxide containing nickel (Ni), cobalt (Co), and manganese (Mn). For example, the negative electrode active material may include one or more of a carbon material and a silicon material. The carbon material may refer to a carbon material having carbon atoms as its main component. The silicon material may be a particle containing silicon (Si) as its main component among metal components, and may include one or more of silicon (Si) particles and silicon oxide particles.

The insulating liquid 530 may include inorganic particles, phenolic compounds, and a binder. For example, the inorganic particles may include one or more aluminum minerals selected from boehmite, gibbsite, diaspore, alunite, and nepheline. For example, the phenolic particles may enhance the dispersibility of the inorganic particles contained in the insulating liquid 530. Such phenolic compounds include tannic acid, baicalein, luteolin, taxifolin, myricetin, quercetin, rutin, catechin, epigallocatechin gallate, butein, piceatannol, pyrogallic acid, ellagic acid, amylose, amylopectin, and xanthan gum.

In exemplary embodiments, the coating apparatus 10 may be configured to simultaneously discharge the electrode slurry 520 and the insulating liquid 530 toward the substrate 510 and to simultaneously apply the electrode slurry 520 and the insulating liquid 530 onto one surface of the substrate 510. The insulating liquid 530 may be applied onto the substrate 510 to cover both sides of the electrode slurry layer 521 applied onto the substrate 510. The insulating liquid 530, applied to the substrate 510 to cover both sides of the electrode slurry layer 521, can suppress or prevent a sliding phenomenon where the thickness of the electrode slurry layer 521 gradually decreases at its outer periphery, and can reduce thickness deviations in the electrode slurry layer 521 applied on the substrate 510.

The coating apparatus 10 may include a coating die 110, a coating shim 120, a coating roll 150, and a flow control block 160.

The coating die 110 can receive electrode slurry 520 and insulating liquid 530 from an external source and discharge the electrode slurry 520 and insulating liquid 530 toward the substrate 510. The coating die 110 may include an electrode slurry discharge port 114 configured to discharge the electrode slurry 520 and an insulating liquid discharge port 115 configured to discharge the insulating liquid 530. The electrode slurry discharge port 114 and the insulating liquid discharge port 115 may be provided on the die lip of the coating die 110 facing the substrate 510 supported on the coating roll 150. The electrode slurry discharge port 114 and the insulating liquid discharge port 115 may be adjacent in a first direction D1.

The electrode slurry discharge port 114 may have a slit shape extending in the first direction D1 and may be configured to discharge the electrode slurry 520 in a discharge direction DD parallel to the second direction D2. The width direction of the electrode slurry discharge port 114 may be parallel to the first direction D1. The length of the electrode slurry discharge port 114 along the first direction D1 may be greater than the length of the electrode slurry discharge port 114 along the third direction D3.

The insulating liquid discharge port 115 may be disposed on both sides of the electrode slurry discharge port 114. The insulating liquid discharge port 115 may have a slit shape extending in the first direction D1 and may be configured to discharge insulating liquid 530 in a direction parallel to the second direction D2. In exemplary embodiments, the coating die 110 may include a plurality of electrode slurry discharge ports 114 spaced apart in the first direction D1, and one insulating liquid discharge port 115 may be provided on each side of each individual electrode slurry discharge port 114.

The coating die 110 may include a first die 111 and a second die 112. The first die 111 may include a manifold 113 for accommodating the electrode slurry 520. The manifold 113 may include a space for accommodating the externally supplied electrode slurry 520. The second die 112 may be coupled to the first die 111 to cover the manifold 113 of the first die 111. The die lip of the coating die 110 may include the die lip of the first die 111 and the die lip of the second die 112. An electrode slurry discharge port 114 and an insulating liquid discharge port 115 may be provided between the die lip of the first die 111 and the die lip of the second die 112. The first die 111 may be spaced apart from the second die 112 with the electrode slurry discharge port 114 and the insulating liquid discharge port 115 disposed between them.

The first die 111 may include a groove 117 extending inward from an outer surface facing the substrate 510. The groove 117 may extend continuously between one side and the other side of the first die 111 along the first direction D1 and may penetrate the first die 111 in the first direction D1. Since the groove 117 penetrates the first die 111 in the first direction D1, the groove 117 may be exposed on each of the two sides of the first die 111 along the first direction D1. The first die 111 may include a first portion 1111 and a second portion 1113 spaced apart in a third direction D3 by the groove 117. The second portion 1113 of the first die 111 may directly face the second die 112.

A coating shim 120 may be disposed within the coating die 110. The coating shim 120 may be inserted into a space provided between the first die 111 and the second die 112. The coating shim 120 may provide an electrode slurry flow path 129 extending in a second direction D2 from the manifold 113 of the coating die 110 to the electrode slurry discharge port 114 of the coating die 110. The electrode slurry flow path 129 can convey the electrode slurry 520 from the manifold 113 of the coating die 110 to the electrode slurry discharge port 114 of the coating die 110.

The coating shim 120 may include a body shim 130 and a spacer shim 140.

The body shim 130 may be fastened to at least one of the first die 111 and the second die 112 by a fastening member such as a bolt. The body shim 130 may include a center body 131 and a pair of side bodies 135. The center body 131 may be disposed on one side of the manifold 113 and spaced apart from the discharge port 114 of the coating die 110 in a first direction D1, with the manifold 113 interposed between them. The center body 131 may extend along one edge of the manifold 113 in the width direction of the manifold 113 (e.g., the D1 direction). The pair of side bodies 135 may be spaced apart in the width direction of the manifold 113 with the manifold 113 between them. One of the pair of side bodies 135 may be connected to one end of the center body 131 along the first direction D1 of the center body 131 and may extend in a second direction D2 from the center body 131 toward the die lip of the coating die 110. The other of the pair of side bodies 135 may be connected to the other end of the center body 131 along the first direction D1 and may extend from the center body 131 toward the die lip of the coating die 110 along a second direction D2. One of the pair of side bodies 135 may be referred to as the first side body 135, and the other of the pair of side bodies 135 may be referred to as the second side body 135.

The spacer shim 140 may be fastened to at least one of the first die 111 and the second die 112 by a fastening member such as a bolt. The spacer shim 140 may be disposed in the second direction D2 between the manifold 113 and the die lip of the coating die 110. The spacer shim 140 may include an insulating liquid flow path 141 communicating with the insulating liquid discharge port 115 and configured to convey the insulating liquid 530 toward the insulating liquid discharge port 115. The spacer shim 140 may discharge the insulating liquid 530 in a direction substantially parallel to the discharge direction DD of the electrode slurry 520. For example, the insulating liquid 530 discharged from the spacer shim 140 may be discharged outside the coating die 110 through the insulating liquid discharge port 115 of the coating die 110. For example, the insulating liquid 530 supplied from the outside can be conveyed through the internal flow path of the second die 112 to the insulating liquid flow path 141 of the spacer shim 140, and the insulating liquid 530 discharged from the end of the insulating liquid flow path 141 can be discharged onto the substrate 510 via the insulating liquid discharge port 115 of the coating die 110.

The coating shim 120 may include a plurality of spacer shims 140 mounted on the coating die 110. The plurality of spacer shims 140 may be arranged in a first direction D1 and spaced apart from each other in the first direction D1. The electrode slurry flow path 129 of the coating shim 120 may be defined by adjacent spacer shims 140, and the width of the electrode slurry flow path 129 may be the distance in the first direction D1 between the adjacent spacer shims 140. In exemplary embodiments, a spacer shim 140 may be positioned on each side of the electrode slurry flow path 129 of the coating shim 120.

In exemplary embodiments, a plurality of spacer shims 140 may include a first edge spacer shim connected to one of the pair of side bodies 135, a second edge spacer shim connected to the remaining one of the pair of side bodies 135, and a center spacer shim provided between the first edge spacer shim and the second edge spacer shim. In this case, the coating shim 120 may include an electrode slurry flow path 129 extending between the first edge spacer shim and the center spacer shim, and an electrode slurry flow path 129 extending between the second edge spacer shim and the center spacer shim.

In exemplary embodiments, in the coating shim 120, the plurality of spacer shims 140 may each be separable from the body shim 130.

In exemplary embodiments, in the coating shim 120, at least one of the plurality of spacer shims 140 may be integral with the body shim 130. For example, a first edge spacer shim may be integral with one of a pair of side bodies 135, a second edge spacer shim may be integral with the remaining one of the pair of side bodies 135, and a center spacer shim may be integral with the center body 131. When the center spacer shim is integral with the center body 131, the coating shim 120 may include a portion that extends in the second direction D2 from a position above the manifold 113 to connect the center spacer shim and the center body 131. In exemplary embodiments, the coating shim 120 may have a single integrated structure comprising the body shim 130 and a plurality of spacer shims 140.

A flow control block 160 may be coupled to the coating die 110. For example, the flow control block 160 may be snap-fitted to the coating die 110 or fastened to the coating die 110 by fastening members such as bolts. The flow control block 160 may be connected to the outer surface of the coating die 110 facing the substrate 510 and may include a portion extending from the outer surface of the coating die 110 toward the substrate 510 or the coating roll 150. The distance A2 between the end of the flow control block 160 and the substrate 510 may be smaller than the distance A1 between the end of the electrode slurry discharge port 114 and the substrate 510. Alternatively, the distance between the end of the flow control block 160 and the coating roll 150 may be smaller than the distance between the end of the electrode slurry discharge port 114 and the coating roll 150. The flow control block 160 may be spaced apart from the electrode slurry discharge port 114 in the third direction D3 or in the transfer direction TD of the substrate 510, and the flow control block 160 may overlap the center part of the electrode slurry discharge port 114 in the third direction D3 or the transfer direction TD of the substrate 510. The width of the flow control block 160 in the first direction D1 may be smaller than the width of the electrode slurry discharge port 114 in the first direction D1.

The flow control block 160 can locally control the flow rate of the electrode slurry 520 discharged from the coating die 110, thereby locally adjusting the thickness of the electrode slurry layer 521 applied on the substrate 510. The flow control block 160 may be disposed within the flow path of the electrode slurry layer 521 to physically interfere with the electrode slurry layer 521 applied on the substrate 510. The flow control block 160 may interfere with and contact only a portion of the electrode slurry layer 521. In the area where the flow control block 160 is disposed, the flow rate of the electrode slurry 520 becomes smaller than the flow rate of the electrode slurry 520 in the surrounding area in the first direction D1 from the flow control block 160. Therefore, the thickness of the electrode slurry layer 521 in the area where the flow control block 160 is disposed may be smaller than the thickness of the electrode slurry layer 521 in the surrounding area in the first direction D1 from the flow control block.

The coating apparatus 10 may include a plurality of flow control blocks 160, and the plurality of flow control blocks 160 may each correspond to a respective one of the plurality of electrode slurry discharge ports 114. The plurality of flow control blocks 160 may each overlap in a third direction D3 with the center part of the corresponding electrode slurry discharge port 114 among the plurality of electrode slurry discharge ports 114, and may be spaced apart from the center part of the corresponding electrode slurry discharge port 114 in the third direction D3. The plurality of flow control blocks 160 can each be disposed in the flow path of the electrode slurry layer 521 formed from the electrode slurry 520 discharged from the corresponding electrode slurry discharge port 114.

In exemplary embodiments, the flow control block 160 may be inserted into a groove 117 provided in a first die 111 of the coating die 110. The flow control block 160 may include a connecting part 163 inserted into the groove 117 of the first die 111 and a protruding part 161 protruding from the first die 111.

### (Second embodiment)

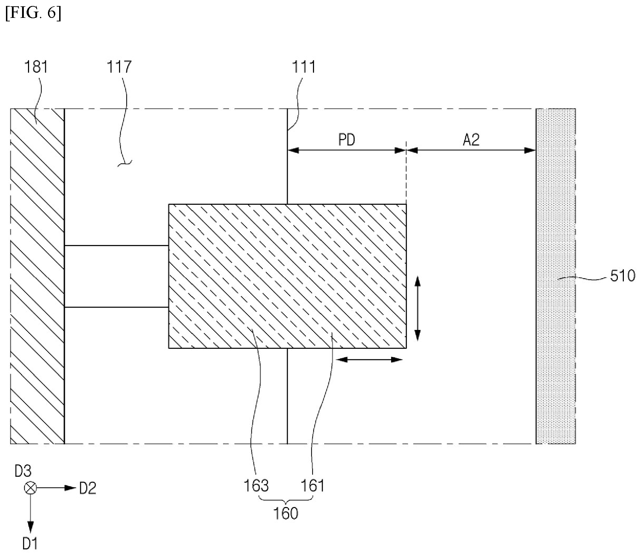

FIG. 6 is a cross-sectional view showing a coating apparatus 10 according to exemplary embodiments.

Referring to FIG. 6 together with FIG. 2, the coating apparatus 10 may include an actuator 181 configured to move the flow control block 160. The actuator 181 may, for example, be mounted on the coating die 110. The actuator 181 may include a motor, a pneumatic cylinder, a hydraulic cylinder, or a combination thereof.

In exemplary embodiments, the actuator 181 may be configured to move the flow control block 160 in a second direction D2 to adjust the distance PD by which the flow control block 160 protrudes from the coating die 110 or the distance A2 between the flow control block 160 and the substrate 510. By adjusting the position of the flow control block 160 in the second direction D2, the thickness of the electrode slurry layer 521 can be controlled in the area where the electrode slurry layer 521 contacts the flow control block 160.

In exemplary embodiments, the actuator 181 can move the flow control block 160 in a first direction D1 to adjust the position of the flow control block 160 in the first direction D1. The actuator 181 can move the flow control block 160 along a groove 117 of a first die 111 extending parallel to the width direction of the electrode slurry discharge port 114. By adjusting the position of the flow control block 160 in the first direction D1, the contact position between the flow control block 160 and the electrode slurry layer 521 can be controlled.

### (Third embodiment)

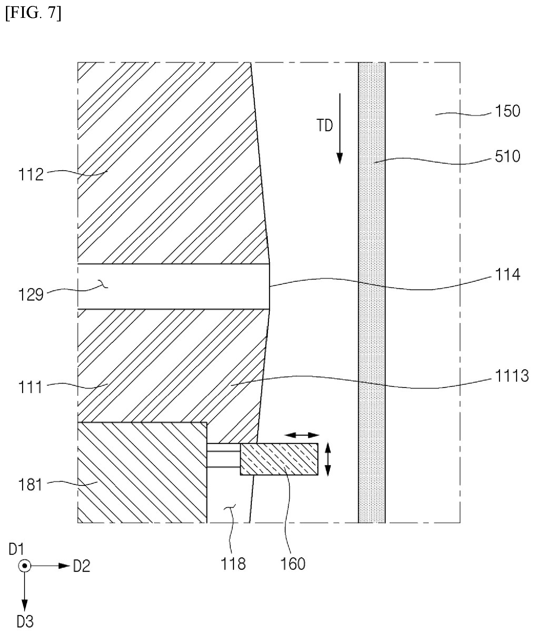

FIG. 7 is a cross-sectional view illustrating a coating apparatus 10 according to exemplary embodiments.

Referring to FIG. 7, the actuator 181 may be configured to move the flow control block 160 in a first direction D1, a second direction D2, and a third direction D3. The groove 118 of the first die 111 may provide space for the flow control block 160 or a rod connecting the flow control block 160 and the actuator 181 to move a certain distance in the first direction D1, second direction D2, and third direction D3. The actuator 181 can move the flow control block 160 in the third direction D3, thereby adjusting the distance between the flow control block 160 and the electrode slurry discharge port 114. By adjusting the position of the flow control block 160 in the third direction D3, the position in the third direction D3 where contact between the flow control block 160 and the electrode slurry layer 521 is initiated can be controlled.

### (Fourth embodiment)

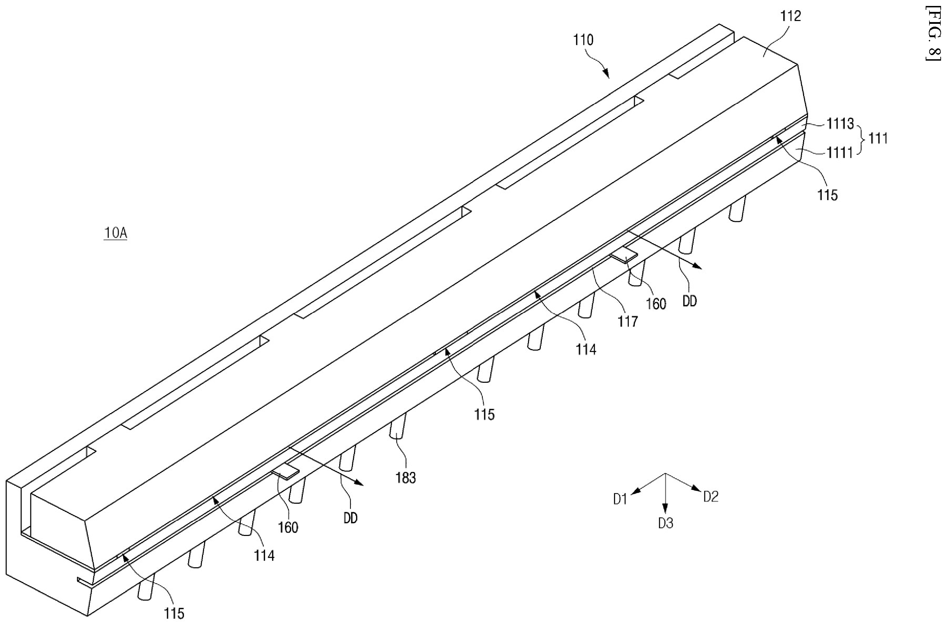

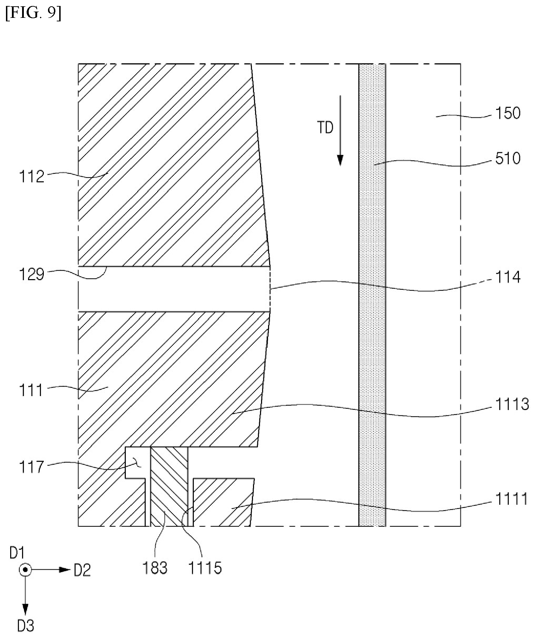

FIG. 8 is a perspective view showing a coating apparatus 10A according to exemplary embodiments. FIG. 9 is a cross-sectional view showing a coating apparatus 10A according to exemplary embodiments.

Referring to FIGS. 8 and 9, the coating apparatus 10A may include a plurality of pressure rods 183 mounted on the coating die 110. A second portion 1113 of the first die 111 may have a plurality of holes 1115 for accommodating the plurality of pressure rods 183. The plurality of holes 1115 may be spaced apart from each other along a first direction D1, and each hole 1115 may communicate with a groove 117 of the first die 111. Each pressure rod 183 may be inserted into a corresponding hole 1115 among the plurality of holes 1115, and the upper end of each pressure rod 183 may contact the first portion 1111 of the first die 111. Each pressure rod 183 may be configured to be moved by an actuator and to press and support the first portion 1111 of the first die 111. The direction in which each pressure rod 183 presses the first portion 1111 of the first die 111 may be the direction from the first die 111 toward the second die 112 or the direction opposite to the transfer direction TD of the substrate 510. By pressing the first portion 1111 of the first die 111 with a plurality of pressure rods 183, the gap between the first die 111 and the second die 112 and/or the flatness of the surface of the first die 111 facing the second die 112 can be adjusted.

### (Fifth embodiment)

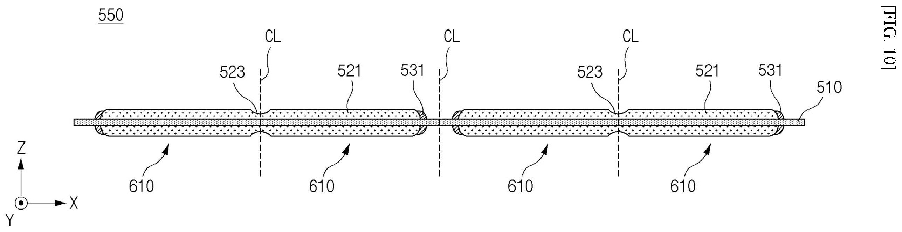

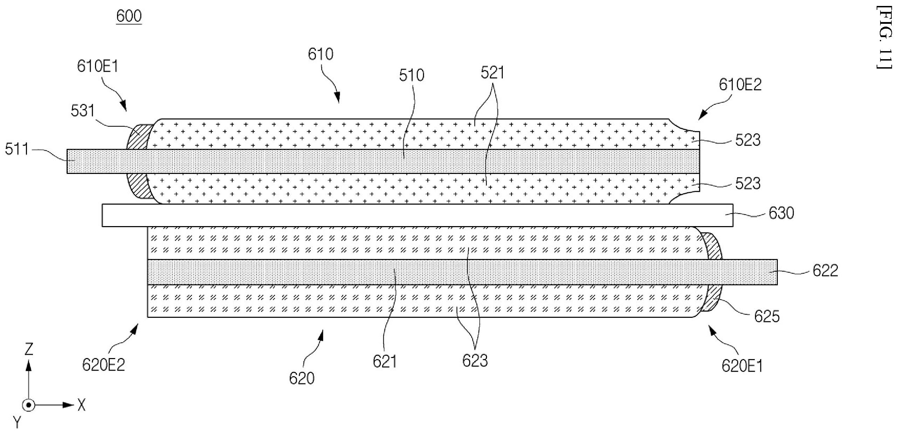

FIGS. 10 and 11 are cross-sectional views illustrating a method for manufacturing an electrode assembly 600 according to exemplary embodiments. Hereinafter, with reference to FIGS. 10 and 11 together with FIGS. 1 through 5, a method for manufacturing an exemplary electrode assembly 600 is described.

Referring to FIG. 10, an electrode structure 550 is formed by performing a coating process. The coating process may be performed in the coating apparatus 10 described with reference to FIGS. 1 through 5. The coating apparatus 10 can discharge electrode slurry 520 and insulating liquid 530 toward a substrate 510 moving on a coating roll 150, thereby applying an electrode slurry layer 521 and an insulating layer 531 on the substrate 510.

The coating process may include forming an electrode slurry layer 521 and an insulating layer 531 on the first surface and second surface of the substrate 510, respectively. The coating process may include a first coating process for applying an electrode slurry layer 521 and an insulating layer 531 on the first surface of the substrate 510, and a second coating process for applying an electrode slurry layer 521 and an insulating layer 531 on the second surface of the substrate 510. The electrode structure 550 may include: a plurality of electrode slurry layers 521 applied on the first surface of the substrate 510, a plurality of insulating layers 531 covering both sides of each of the plurality of electrode slurry layers 521 applied on the first surface of the substrate 510, a plurality of electrode slurry layers 521 applied on the second surface of the substrate 510, and a plurality of insulating layers 531 covering both sides of each of the plurality of electrode slurry layers 521 applied on the second surface of the substrate 510.

In the electrode structure 550, a relatively thin semi-coated part 523 may be provided at the center part of each electrode slurry layer 521. The semi-coated part 523 may be provided at the center part of the electrode slurry layer 521 and may include a groove continuously extending along the longitudinal direction (e.g., the Y-direction) of the electrode structure 550. During the coating process using the coating apparatus 10, the flow control block 160 may interfere with the center part of the electrode slurry layer 521, thereby reducing the flow rate of the electrode slurry 520 constituting the center part of the electrode slurry layer 521. During the coating process, as the flow rate of the electrode slurry 520 forming the center part of the electrode slurry layer 521 is relatively reduced by the flow control block 160 compared to its peripheral part, the electrode slurry layer 521 may form a semi-coated part 523 at its center part.

After the coating process, a drying process is performed on the electrode slurry layer 521 and the insulating layer 531 of the electrode structure 550, and a slitting process is performed to cut the electrode structure 550 along the cutting lines CL. The cutting lines CL may include cutting lines CL that traverse the semi-coated part 523 of each electrode slurry layer 521 in the longitudinal direction (e.g., the Y-direction) of the substrate 510. During the slitting process, each electrode slurry layer 521 may be cut along the cutting line CL extending along the semi-coated part 523 of the individual electrode slurry layer 521. As a result of the slitting process, the electrode structure 550 may be separated into a plurality of positive electrodes 610.

Referring to FIG. 11, an electrode assembly 600 is formed by vertically stacking (e.g., in the Z-direction) a negative electrode 620, a separator 630, and a positive electrode 610.

The positive electrode 610 may include an electrode slurry layer 521 and an insulating layer 531 applied on the first surface and second surface of the substrate 510, respectively. The positive electrode 610 may include a first end 610E1 including an electrode tab 511 and a second end 610E2 opposite the first end 610E1. At the second end 610E2 of the positive electrode 610, the electrode slurry layer 521 may have a semi-coated part 523. The thickness of the semi-coated part 523 may be smaller than the thickness of the center part of the electrode slurry layer 521. The negative electrode 620 may include an electrode slurry layer 623 and an insulating layer 625 applied on the first surface and second surface, respectively, of the substrate 621. The negative electrode 620 may include a first end 620E1 including an electrode tab 622 and a second end 620E2 opposite the first end 620E1. A separator 630 may be interposed between the positive electrode 610 and the negative electrode 620. In the electrode assembly 600, the first end 620E1 of the negative electrode 620, which includes an electrode tab 622, faces the second end 610E2 of the positive electrode 610, which includes a semi-coated part 523, and the second end 620E2 of the negative electrode 620 may face the first end 610E1 of the positive electrode 610 including the electrode tab 511.

In the electrode assembly according to the comparative example, the electrode slurry layer of the negative electrode at the first end of the negative electrode including the electrode tab may have a sliding region with a relatively small thickness, and the electrode slurry layer of the positive electrode at the second end of the positive electrode facing the first end of the negative electrode may have a thickness generally equal to the thickness at its center part. In this case, there is a risk that an NP ratio reversal phenomenon, where the NP ratio (negative to positive ratio) becomes less than 1, may occur in the region of the electrode assembly where the first end of the negative electrode including the electrode tab and the second end of the positive electrode face each other.

In the electrode assembly 600 according to exemplary embodiments, the electrode slurry layer 521 of the positive electrode 610 provided on the second end 610E2 of the positive electrode 610 facing the first end 620E1 of the negative electrode 620 including the electrode tab 622 may include a relatively thin semi-coated part 523. Accordingly, in the region of the electrode assembly 600 where the first end 620E1 of the negative electrode 620, including the electrode tab 622, faces the second end 610E2 of the positive electrode 610, the occurrence of the NP ratio reversal phenomenon can be prevented. Since the NP ratio reversal phenomenon can be prevented in the electrode assembly 600, lithium-ion precipitation during charging and discharging can be prevented, and the safety and reliability of the secondary battery including the electrode assembly 600 can be improved.

According to exemplary embodiments of the present disclosure, the coating apparatus includes a flow control block configured to locally reduce the flow rate of the electrode slurry discharged from the coating die. Consequently, the electrode slurry layer formed by applying the electrode slurry onto the substrate can be formed with a relatively thin semi-coated part at its center part.

According to exemplary embodiments of the present disclosure, in an electrode assembly manufactured by stacking a positive electrode and a negative electrode, the end of the positive electrode facing the end of the negative electrode including the electrode tab has a relatively thin semi-coated part. This prevents the NP ratio reversal phenomenon in the electrode assembly. Accordingly, lithium-ion precipitation during charging and discharging can be prevented, and the safety and reliability of the secondary battery including the electrode assembly can be improved.

The present disclosure has been described in detail above with reference to the drawings and embodiments. However, the configurations described in the drawings or embodiments of the present specification are merely one embodiment of the present disclosure and do not represent all of the technical ideas of the present disclosure. Therefore, it should be understood that various equivalents and modifications may be made to the present disclosure at the time of filing this application.

## Claims

1. A coating apparatus comprising:
a coating die configured to discharge an electrode slurry toward a substrate and comprising an electrode slurry discharge port for discharging the electrode slurry; and
a flow control block connected to the outer surface of the coating die facing the substrate and extending from the outer surface of the coating die toward the substrate, wherein
the flow control block is spaced apart from the electrode slurry discharge port, wherein
the width of the flow control block is smaller than the width of the electrode slurry discharge port.

2. The coating apparatus of claim 1, wherein
the distance between the flow control block and the substrate is smaller than the distance between the electrode slurry discharge port of the coating die and the substrate.

3. The coating apparatus of claim 1, wherein
the electrode slurry discharged from the coating die forms an electrode slurry layer applied onto the substrate, and
the flow control block is disposed on the flow path of the electrode slurry layer such that it interferes with the center part of the electrode slurry layer.

4. The coating apparatus of claim 1, wherein
the flow control block comprises a connecting part inserted into a groove of the coating die and a protruding part protruding from the coating die.

5. The coating apparatus of claim 1, further comprising:
an actuator configured to move the flow control block.

6. The coating apparatus of claim 5, wherein
the actuator is configured to move the flow control block to adjust the distance by which the flow control block protrudes from the coating die.

7. The coating apparatus of claim 5, wherein
the actuator is configured to move the flow control block in a direction parallel to the width direction of the electrode slurry discharge port.

8. The coating apparatus of claim 5, wherein
the actuator is configured to move the flow control block in a direction perpendicular to the width direction of the electrode slurry discharge port.

9. The coating apparatus of claim 1, wherein
the coating die comprises a first die and a second die spaced apart with the electrode slurry discharge port between them, wherein
the first die comprises:
a groove extending in the width direction of the electrode slurry discharge port; and
a first portion and a second portion spaced apart with the groove in between, wherein
the groove of the first die extends from one side part of the first die to the other side part to penetrate the first die, and
the flow control block comprises a connecting part inserted into the groove of the coating die and a protruding part protruding from the coating die.

10. The coating apparatus of claim 9, wherein
the second portion of the first die faces the second die, and further comprises
a pressure rod disposed within the first portion of the first die and configured to pressurize the second portion of the first die.

11. The coating apparatus of claim 1, further comprising:
a coating shim disposed within the coating die, and comprising a flow path for conveying the electrode slurry and communicating with the electrode slurry discharge port.

12. The coating apparatus of claim 11, wherein
the coating die is further configured to discharge the insulating liquid toward the substrate, and
the coating shim further comprises a flow path for conveying the insulating liquid.

13. The coating apparatus of claim 1, further comprising:
a coating roll configured to transfer the substrate, wherein
the distance between the flow control block and the coating roll is smaller than the distance between the electrode slurry discharge port of the coating die and the coating roll.
